# EUROPEAN PATENT APPLICATION

(11) **EP 4 778 752 A1**
(43) Date of publication of application: **22.07.2026**
(21) Application number: 26153239.4
(22) Date of filing: 21.01.2026
(51) Int. Cl.: B60J 7/06

(54) **SLIDING SKID**

(30) Priority: 21.01.2025 IT 202500000954
(71) Applicant: Marcolin Covering S.r.l., 33170 Pordenone (PN) (IT)
(72) Inventor: MARCOLIN, Luca, 33170 Pordenone (PN) (IT); COLUSSI MAS, Massimiliano, 33070 Maron di Brugnera (PN) (IT)
(74) Representative: Gallo, Luca

(57) **Abstract**

A sliding skid is described for a rib foot suitable for supporting a covering tarpaulin, the rib being movable by a traction rope to slide, the skid comprising in use:
- a block defining a cavity shaped to accommodate the foot of the rib;
- a guide element connected to the block and equipped with at least one tunnel into which the rope can be inserted;
- a sliding member mounted under the block and serving as its base, for sliding along the edge.

To facilitate maintenance, the block comprises a first portion and the sliding member comprises a second portion,
the first and second portions being shaped so that they can be coupled by sliding relative to each other along an axis, fitting into each other in order to stably connect the block and the sliding member, preventing them from becoming detached.

## Description

The present invention relates to a sliding skid mounted at the end of a support rib of a covering tarpaulin, in particular for covering a container; a support rib equipped with the sliding skid; and a covering system comprising a plurality of such ribs.

Covering systems for covering/uncovering a container are known which use a set of ribs to support and spread a tarpaulin over the container. The ribs slide on opposite edges of the container pulled by rope loops, see e.g. EP 2321133. One problem with the system is the wear or damage to the runners mounted at the ends of the ribs to allow them to slide with little friction on the container. In particular, when the base of the runner wears out, it is very complicated and laborious to replace it or replace the runner completely.

The main purpose of the invention is to eliminate or mitigate the problem by creating a different type of skid of the above-mentioned type.

Another purpose is to create a skid of the above type in which it is easy and quick to replace the worn base.

A sliding skid is therefore proposed that can be coupled to a foot of a rib supporting a cover tarpaulin, the rib being movable by a traction rope to slide, for example, on opposite sides of an open-top container.
the sliding skid comprising, in use:
   - a block delimiting a cavity shaped to house the foot of the rib;
   - a guide element connected to the block and equipped with at least one tunnel into which the rope can be inserted;
   - a sliding member mounted under the block and serving as its base for sliding (e.g. on the side of the container);
where the block comprises a first portion and the sliding member comprises a second portion,
the first and second portions being shaped so that
   be able to couple by means of relative sliding along an axis, fitting into each other in order to stably connect the block and the sliding member, preventing their detachment.

The first and second portions, when coupled together, constrain the relative movement between the block and the sliding member so that they have only one possible relative movement, namely sliding along said axis.

Advantageously, therefore, the sliding member is separable from the block, which is configured to slide on the side of the container and is easily removable to facilitate maintenance and wear operations.

Advantageously, these portions make the sliding member and the block integral without the aid of other fastening means such as screws or clamps. This makes assembly and disassembly of the two very quick and easy.

In one embodiment, the first and second portions form a prismatic joint. The block and the sliding member can be connected/are connected by means of a prismatic joint which allows them, via their respective flat surfaces, to move relative to each other in only one direction, i.e. sliding along said joint, without relative rotation.

The *prismatic joint* is a type of mechanical joint that allows relative movement between the block and the sliding member only along a straight line, while maintaining movement constraints in every direction orthogonal to that of the straight line (or movement). In other words, this *joint* only allows relative sliding of the block and the sliding member along a linear trajectory while preventing any rotational or translational movement in other directions. For this purpose, these portions of the block and the sliding member are configured to interlock with each other and form the joint.

The prismatic joint advantageously makes the sliding member and the block integral without the aid of other fastening means such as screws or clamps. This makes assembly and disassembly of the two very quick and easy.

Alternatively, in accordance with a form of construction not illustrated in the attached figures, the first and second portions constitute a non-prismatic joint, i.e. without flat surfaces, being shaped, for example, with curved surfaces (such as cylindrical surfaces in particular) which in any case allow the first portion to be constrained to the second portion along directions orthogonal to the direction of relative sliding between the block and the sliding member.

To prevent accidental separation between the block and the sliding member, in one embodiment
one of the block or the sliding member comprises a groove parallel to the axis and
the other between the block or the sliding member comprises a longitudinal tenon extending parallel to the axis,
the tenon being slidably housed in the groove and
the section of the groove, viewed in a plane orthogonal to said axis, is substantially complementary to the section of the tenon, viewed in the same orthogonal plane.

In particular, the sections of the groove and the tenon have a narrowing at said flat relative sliding surfaces, in order to prevent separation between the block and the sliding member in a direction orthogonal to the axis due to the interposition of parts.

In one embodiment, the axis is parallel to the longitudinal axis of the cavity, so that the translation of the skid, which occurs orthogonally to the longitudinal axis of the cavity, does not induce relative movement between the block and the sliding member along the axis.

To simplify the construction of the block and its coupling with the rib foot, in one embodiment the block comprises a first upper element and a second lower element which are vertically juxtaposed in a sandwich configuration to form the cavity.

In one embodiment, the block comprises an opening on a first side corresponding to the entrance to the cavity, and on a second side, opposite the first, a wall that closes the cavity, making it blind, and preferably the guide element is mounted on the second side to protrude from the block.

This makes it easy to mount the guide element on the block, and the guide element keeps the rope at a suitable distance from the skid.

In one embodiment, the sliding member is made of an anti-friction material such as polyamide, Teflon, POM, polyester, polypropylene or polyethylene.

In one embodiment, the cover tarpaulin is installed to cover an open-top container, e.g. of a truck.

In one embodiment, the second portion has an inverted wedge-shaped cross-section, e.g. V-shaped, and the first portion has a complementary cross-section, or vice versa.

Another aspect of the invention relates to a support rib equipped with the skid according to the invention.

Another aspect of the invention relates to a covering system comprising a plurality of ribs elements equipped with the skid according to the invention.

Another aspect of the invention relates to an open-top container, e.g. of a vehicle, comprising:
- opposite sides of the container,
- a plurality of ribs which are
   equipped with two end feet, each foot having a sliding skid according to the invention attached to it, and
   mounted so as to slide on the container with their respective feet on each side,
- a rope loop for pulling the ribs over the container so as to distribute them over the container to cover it or pack them on one side of the container to uncover it.

The advantages of the invention will be further clarified by preferred embodiments described below with reference to the attached drawings, in which:
- Figure 1 shows a side view of a covering system;

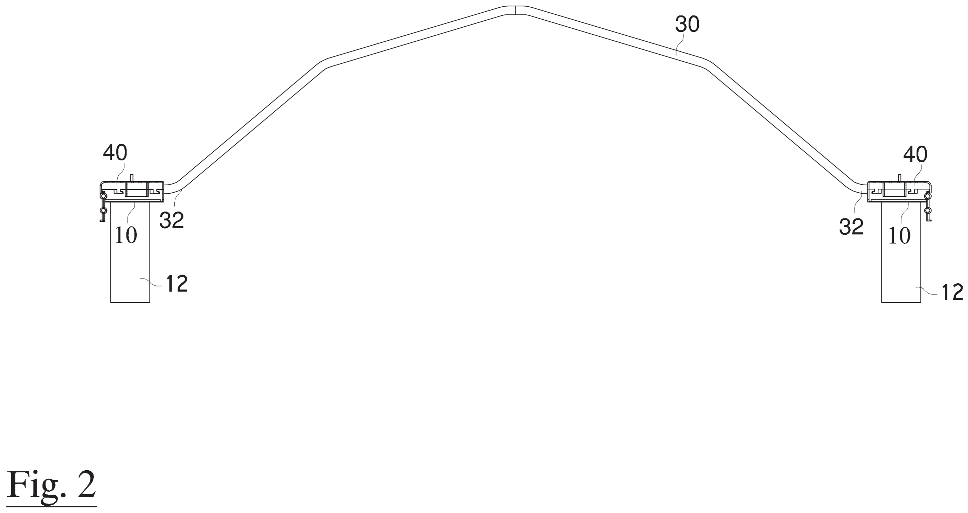

- Figure 2 shows a front view of the system of Figure 1;
- Figure 3 shows a three-dimensional view of a skid for rib;
- Figure 4 shows an exploded three-dimensional view of the skid;
- Figure 5 shows an enlarged view of the dotted circle in Figure 4.

In the figures, identical numbers indicate identical or conceptually similar parts. The system is described as in use and preferably mounted on an open-top container.

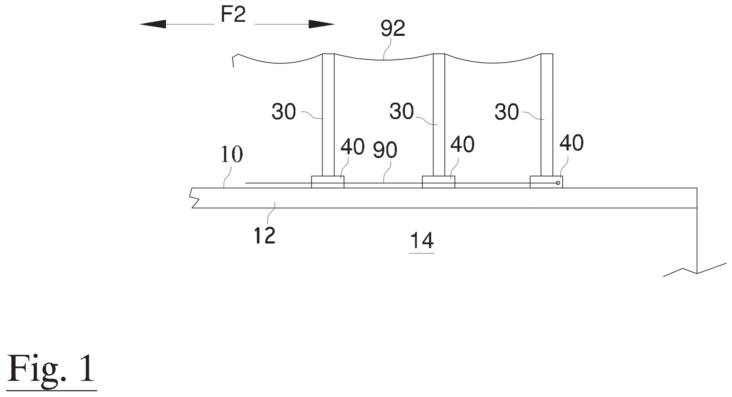

Fig. 1 shows schematically a preferred sliding system to which a sliding skid according to the invention is applicable.

Above opposite edges 10 of sides 12 of a container 14, the ribs 30 can slide horizontally (direction F2 parallel to edges 10), pulled in a known manner by a rope loop 90. The ribs 30 support a tarpaulin 92 covering the container 14. By moving the rope loop 92, the container 14 can be covered or uncovered in a known manner by distributing the ribs 30 over the container 14 or by packing them all on one side of the container 14.

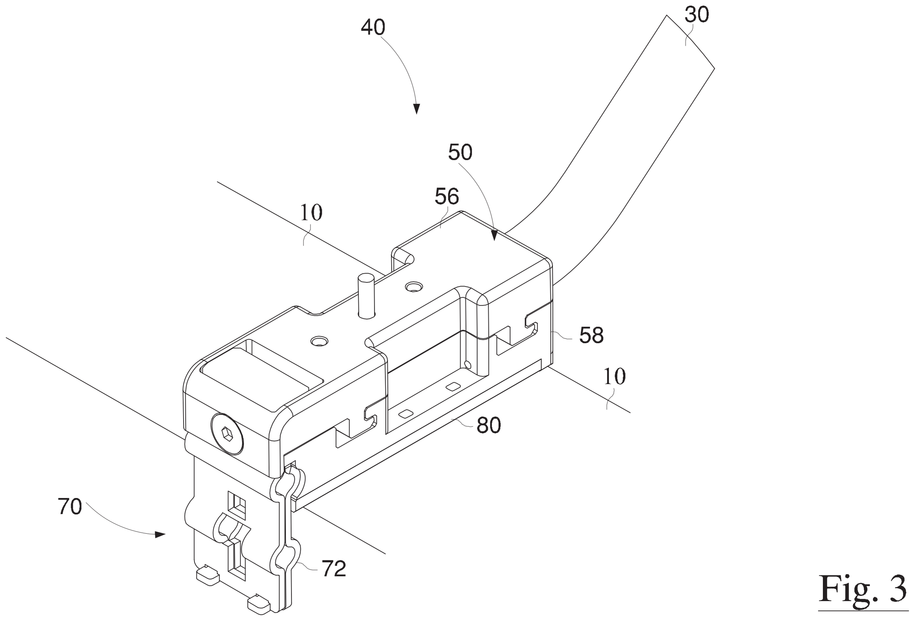

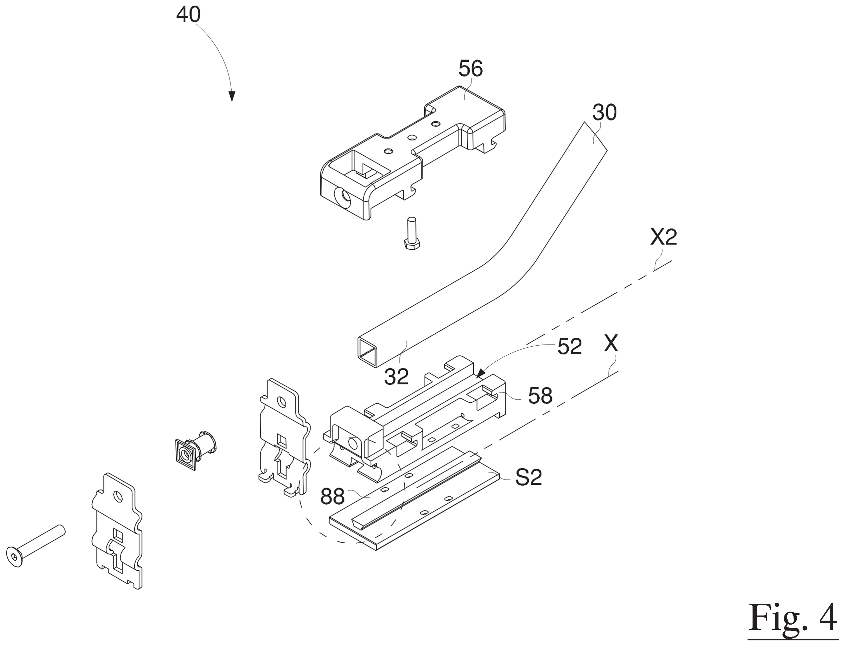

A skid 40 is mounted at each end or foot 32 of each rib 30, as shown in detail in Figs. 3-5.

The skid 40 comprises
- a block 50 that delimits a cavity 52 shaped to accommodate the foot 32 in a complementary manner;
- a guide element 70 connected to the block 50 and equipped with at least one tunnel 72 into which the rope 90 can be inserted; and
- a sliding member 80 mounted under - and as a base for - block 50 to slide on edge 10.

In particular, the sliding member 80 is a separate piece from the block 50, and is removably connected to the latter. Advantageously, the sliding member is configured to slide on the side 12 of the container 14, and is removably connected to the block 50 so as to be easily removable to simplify maintenance and wear operations.

Preferably, block 50 is not configured to slide on side 12 of container 14, and is configured only to connect stably and securely to foot 32 of rib 30, in particular by housing it inside cavity 52, delegating the sliding function to sliding member 80.

In fact, the two-piece design of block 50 and sliding member 80 allows for the creation of a connecting element between the skid 40 (block 50) and foot 32 of rib 30, which is sturdy and solid, yet makes maintenance or replacement easier and more economical.

Usually, in fact, skates are made with simple, less robust designs precisely because they are conceived as products that wear out easily and need to be replaced frequently. In this case, however, it is possible to make a skid 40 that is both solid and robust, but also easy to replace.

Advantageously, the provision of the sliding member 80 separated from the block 50 allows a first portion of the skid 40 (comprising the block 50 and the guide element 70) to be functionally separated from a second portion of the skid 40 (comprising the sliding member 80) intended for direct contact with the side 12 of the container 14. In this way, the function of sliding the skid 40 on the side 12 of the container 14 is assigned to the sliding member 80, i.e. the component of the skid 40 specifically designed to withstand friction and wear during the sliding of the skid 40.

This configuration of the skid 40 allows the wear caused by the sliding of the skid 40 on the edge 12 to be concentrated on a dedicated component of the skid 40 (i.e. the sliding member 80), preventing deterioration due to the sliding of the skid 40 on the side 12 from directly affecting the block 50 and/or the guide element 70 of the skid 40, with a consequent increase in the operating life and stability of the first portion of the skid 40 (i.e. the block 50 and the guide element 70).

Furthermore, the fact that the sliding member 80 is a separate/separable component from the block 50 makes it possible to replace the sliding member 80 independently, i.e. without the need to intervene on the block 50 and/or the guide element 70 of the skid 40. This allows for targeted and rapid maintenance operations, limited exclusively to the part subject to wear (i.e. the sliding member 80), improving the overall efficiency of the skid 40.

The cavity 52 has a longitudinal axis X2, orthogonal to the direction F2, which coincides with that of the foot 32 when inserted into the cavity 52.

Advantageously, the longitudinal axis X2 is substantially longitudinal to the foot 32 of the rib 30 when the latter is disposed in the cavity 52.

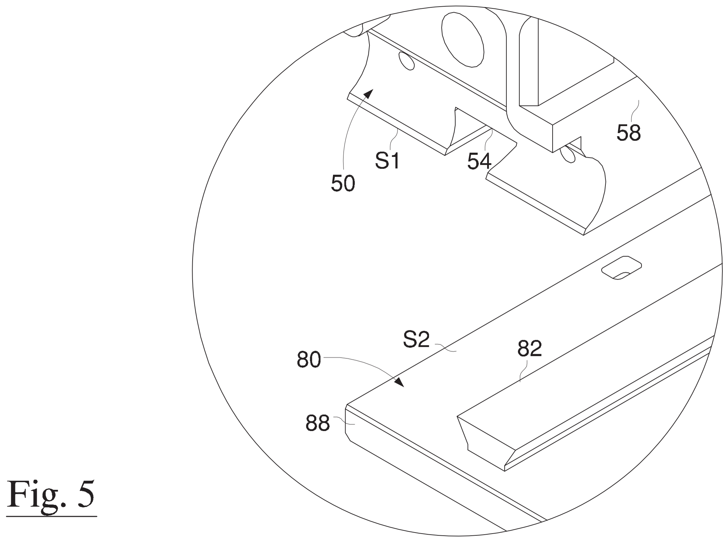

As can also be seen in Fig. 5, block 50 and sliding member 80 are connected by a prismatic joint that constrains their relative movement to sliding along a common axis X, without relative rotation, on respective flat surfaces S1 and S2.

This prismatic joint therefore prevents any relative rotation between block 50 and sliding member 80 and any relative translation between block 50 and sliding member 80 along directions other than that defined by the common axis X, thanks to the cooperation of the aforementioned respective flat surfaces S1 and S2 for relative sliding.

Advantageously, but not necessarily, the X axis is parallel to the X2 axis. Thus, the translation of the rib 30 does not push the sliding member 80 with respect to the block 50 along the X axis.

In one embodiment, which ensures both a secure coupling between the block 50 and the sliding member 80 and, at the same time, ease of removal from each other, block 50 comprises a lower groove 54 extending longitudinally parallel to the X axis, and sliding member 80 comprises a longitudinal tenon 82 extending parallel to the X axis.

Of course, it is also possible to envisage that block 50 includes a longitudinal tenon 82 extending parallel to the X-axis, and that sliding member 80 includes a lower groove 54 extending longitudinally parallel to the X-axis. Furthermore, it is also possible to provide two separate tenons 82 and two separate lower grooves 54, regardless of the elements (block 50 or sliding member 80) on which they are formed.

According to further variants, the tenons 82 and the lower grooves 54 may be continuous along the entire longitudinal extension of the skid 40 or extend only partially along the common axis X, depending on the construction requirements and mechanical strength of the skid 40.

With the sliding skid 40 assembled, the tenon 82 is slidably housed in the lower groove 54 to form a prismatic joint.

In one embodiment, the prismatic joint is shaped to constrain the relative movement of the block 50 and the sliding member 80 to sliding along the X axis only. For this purpose, the sections of the lower groove 54 and the tenon 82 are preferably shaped in a complementary manner to prevent the two from separating. For example, as shown in the drawings, the lower groove 54 and the tenon 82 have a cross-section shaped for a dovetail joint. However, other shapes are possible, e.g. polygonal, and/or the position of the tenon 82 and the lower groove 54 can be reversed.

While the prismatic joint coupling gives strength to the skid 40, the sliding member 80 is easily replaceable by pulling it along the X-axis to detach it from the skid 40, and a new sliding member 80 can be mounted using the same manoeuvre.

In one embodiment, the sliding member 80 consists of a flat plate 88 from which the tenon 82 protrudes, preferably in the centre.

Advantageously, in accordance with a variant not illustrated in the attached figures, the sliding member 80 comprises two separate tenons 82, arranged on opposite sides of the sliding member 80, and the block 50 is advantageously equipped with two lower grooves 54, also arranged on opposite sides of the block 50 and configured to each accommodate a corresponding tenon 82 of the sliding member 80.

In one embodiment, which simplifies the production and creation of cavity 52, block 50 comprises a first upper element 56 and a second lower element 58 that are vertically juxtaposed to sandwich cavity 52.
In one embodiment, the block 50 comprises
on a first side an opening corresponding to the entrance to the cavity 52, and
on a second side, opposite the first, a wall 60 that closes the cavity, making it blind, and
the guide element 70 is mounted on the second side to protrude from the block 50.

In particular, the guide element 70 protrudes downwardly from the block 50, as shown in Figure 3. Advantageously, the lower groove 54 is made on the first side of the block 50, i.e. on the same side on which the cavity 52 is open, so that the sliding member 80 can be removed by sliding the tenon 82 away from the guide element 70.

Advantageously, the skid 40 includes an additional fastening element, not shown in the accompanying figures (such as one or more screws), which permanently connects the block 50 and the sliding member 80 once they have been slidably coupled together.

Advantageously, the first upper element 56 and the second lower element 58 comprise respective semi-cavities, which define the cavity 52 once assembled. More specifically, the first upper element 56 and the second lower element 58 are clamped together with the foot 32 of the rib 30 interposed between them, which is therefore housed inside the cavity 52. Advantageously, the cavity 52 is open at an insertion opening for the foot 32 of the rib 30, and develops radially around the latter once inserted, in particular being closed both at the bottom (by the second lower element 58) and at the top (by the first upper element 56). In this way, it is possible to obtain a robust and stable block 50, which is also wear-resistant and therefore economical during use.

## Claims

1. A sliding skid for a foot (32) of a rib (30) adapted to support a covering tarpaulin, the rib being movable by a traction rope to slide, the skid (40) comprising in use:
- a block (50) defining a cavity (52) shaped to accommodate the foot (32) of the rib (30);
- a guide element (70) connected to the block (50) and equipped with at least one tunnel (72) into which the rope can be inserted;
- a sliding member (80) mounted under and as a base for the block (50) for sliding;
where the block (50) comprises a first portion and the sliding member comprises a second portion,
the first and second portions being shaped so that they can be coupled, by means of relative sliding, along an axis, fitting into each other in order to stably connect the block (50) and the sliding member (80), preventing them from becoming detached.

2. Sliding skid according to claim 1, wherein the first and second portions form a prismatic joint.

3. Sliding skid according to claim 2, wherein the first and second portions form a prismatic joint that allows them, by means of respective flat surfaces of relative sliding, a single relative movement, i.e. sliding along an axis, without relative rotation.

4. Sliding skid according to any of the preceding claims, wherein
one between the block (50) and the sliding member (80) comprises a groove (54) parallel to an axis (X) and
the other between the block (50) and the sliding member (80) comprises a longitudinal tenon (82) extending parallel to said axis (X),
the tenon (82) being slidably accommodated in the groove (54) and
the section of the groove (54), viewed in a plane orthogonal to said axis, is substantially complementary to the section of the tenon (82), viewed in the same orthogonal plane.

5. Sliding skid according to claim 4, wherein the sections of the groove (54) and the tenon (82) have a narrowing at the flat surfaces of relative sliding of the groove (54) and the tenon (82), in order to prevent, by interposition of parts, the block (50) and the sliding member (80) detaching in a direction orthogonal to said axis (X).

6. Sliding skid according to any of the preceding claims, wherein the sliding member (80) is made of an anti-friction material.

7. Sliding skid according to claim 6, wherein the anti-friction material is polyamide, Teflon, POM, polyester, polypropylene or polyethylene.

8. Sliding skid according to any of the preceding claims, wherein the sliding member (80) consists of a flat plate from which the second portion or tenon (82) protrudes.

9. Sliding skid according to any of the preceding claims, wherein the second portion has an inverted wedge section and the first portion has a complementary section, or vice versa.

10. Sliding skid according to any of the preceding claims, wherein said block (50) comprises a first upper element (56) and a second lower element (58) which are vertically juxtaposed to form a cavity (52), into which the foot (32) of said rib (30) can be inserted.

11. Open-top container comprising:
- opposite edges (10) of the container (14),
- a plurality of ribs (30) that are
equipped with two end feet (32), each foot (32) having a sliding skid (40) attached to it as defined in any of the preceding claims, and
mounted slidably on the container (14) with their respective feet on each edge (10),
- a rope loop for pulling the ribs (30) over the container (14) so as to distribute them over the container (14) or pack them on one side of the container (14).
